# EUROPEAN PATENT APPLICATION

(11) **EP 0 605 194 A2**
(43) Date of publication of application: **06.07.1994**
(21) Application number: 93310440.8
(22) Date of filing: 22.12.1993
(51) Int. Cl.: C08L 69/00, C08L 67/02

(54) **Transparent polycarbonate-polyester-blends**

(30) Priority: 28.12.1992 JP 359734/92
(71) Applicant: GE PLASTICS JAPAN LIMITED, Chuo-Ku, Tokyo (JP)
(72) Inventor: Ishiwa, Kenichi, Oyama City, Tochigi Prefecture (JP)
(74) Representative: Pratt, Richard Wilson

(57) **Abstract**

A resin composition having superior transparency and excellent impact resistance, comprises
(A) a polyester having a terephthalic acid repeating unit as the primary acid component and cyclohexanedimethanol as the primary glycol component and an intrinsic viscosity [η] of at least 0.5 dl/g, and
(B) a polycarbonate produced by hot-melt polymerization of a dihydroxy aromatic compound having an equivalence ratio of phenolic end groups (I) and nonphenolic end groups (II), (I)/(II), greater than 1/19.

## Description

The present invention pertains to a resin composition containing polyester and polycarbonate; more precisely, it pertains to a resin composition containing a polyester and a polycarbonate with superior transparency and impact resistance.

Polycarbonate is widely used as the raw material for containers because of its superior transparency and impact resistance, but when the material is used by itself, in general, the flow properties are poor; therefore, the moldability is poor. In order to improve the flow properties of polycarbonate, a method consisting of decreasing the molecular weight is known, but this leads to a reduction in impact resistance.

Polycarbonate compositions produced by mixing polycarbonate and polyesters such as polybutylene terephthalate and polyethylene terephthalate have been suggested as resin compositions having superior transparency and impact resistance as well as good moldability in Japanese Kokai Patent Application Nos. Sho 48[1973]-54160, Sho 49[1974]-107354, and Japanese Kokoku Patent No. Sho 58[1983]-18391.

However, in these conventional resin compositions, the transparency is still inadequate, furthermore, the impact resistance deteriorates sharply as the proportion of the polyester is increased. It is believed that the problem is due to lack of progress in the polycondensation reaction between the polycarbonate and polyester in the resin composition as the transesterification reaction proceeds.

Also, a resin composition produced by a reaction between a polycarbonate and a polyester, or oligomers thereof, in the presence of a catalyst is described in Japanese Kokai Patent Application No. Hei 1[1989]-236235. The transparency is superior in said resin composition, but the flow property is inferior, and casting is difficult; furthermore, it requires a long reaction time; therefore, it is not suitable for a production process.

The objective of the present invention is to produce a resin composition containing a polyester and a polycarbonate with superior transparency and impact resistance.

The present invention is a resin composition containing
(A) a polyester having a terephthalic acid repeating unit as the primary acid component and cyclohexanedimethanol as the primary glycol component and an intrinsic viscosity [η] of at least 0.5 dL/g, and
(B) a polycarbonate produced by hot-melt. polymerization of a dihydroxy aromatic compound having an equivalence ratio of phenolic end groups (I) and nonphenolic end groups (II), (I)/(II), greater than 1/19.

The inventors discovered that a transesterification reaction between polycarbonate and polyester can be performed to a desired degree when a polycarbonate having a specific structure is produced by performing hot-melt polymerization of a dihydroxy aromatic compound and a carbonic acid diester; that is, a polycarbonate having the end group equivalence ratio described above is mixed with the specific polyester described above, which leads to production of the resin composition of the present invention with superior transparency and impact resistance.

The polycarbonate component (B) used in the present invention is produced by hot-melt polymerization of a dihydroxy aromatic compound and a carbonic acid diester, and the equivalence ratio of the phenolic end groups (I) and nonphenolic end groups (II), (I)/(II), is greater than 1/19, preferably greater than 1/10, and especially preferable is one greater than 1/5. When said ratio is less than 1/19, it is difficult to control the transesterification reaction of the polyester, and in order to maintain the transparency of the composition, it is necessary to achieve strict temperature control at the time of the casting process; therefore, it is not desirable.

Also, said phenolic end groups (I) are preferably represented by the following formula 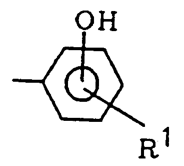
and said nonphenolic end groups (II) for the equivalence ratio are represented by the following formula 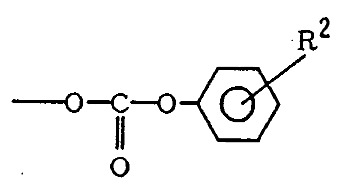
In this case, R¹ and R² in the above formulas each represent a hydrogen, or a straight-chain or branched, nonsubstituted, or halogen substituted, preferably with fluorine, chlorine, or bromine, alkyl group with less than 20 carbon atoms.

Adjustment of the equivalence ratio of the end groups of said polycarbonate can be easily achieved by changing the molar ratio of the dihydroxy aromatic compound raw material and the carbonic acid diester raw material at the time of manufacturing the polycarbonate by hot-melt polymerization. For example, when bisphenol A is used as the dihydroxy aromatic compound and diphenyl carbonate is the carbonic acid diester, the end groups of the polycarbonate are the phenolic residue based on the bisphenol A and the phenolic residue based on the diphenyl carbonate, and when the molar ratio of the bisphenol A is increased, the equivalence ratio of the phenolic end group (I), and nonphenolic end groups (II), (I)/(II), in the product polycarbonate increases.

Also, the polycarbonate used in the present invention may be branched. Said branched polycarbonate can be produced by a reaction between a polyfunctional aromatic compound.with a diphenol and/or a carbonate precursor.

In general, a polycarbonate, especially, a polycarbonate produced by a reaction between a dihydroxy aromatic compound such as bisphenol A and a carbonyl chloride (especially by the interfacial method), the equivalence ratio of phenolic end groups (I) and non-phenolic end groups (II), (I)/(II), is less than 1/19, and that is not desirable.

The method for producing the polycarbonate of the present invention is a known method and is a method of synthesis consisting of transesterification of a dihydroxy aromatic compound and a carbonic acid diester.

The dihydroxy aromatic compound is not especially limited, and various known types can be used. As examples, the compounds represented by the formula below, 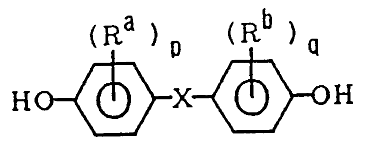
(in this case, R^{a} and R^{b} each represent a halogen or a univalent hydrocarbon group; X represents -C(R^{c})(R^{d})-, -C(=R^{e})-, -O-, -S-, -SO-, or -SO₂-; R^{c} and R^{d} each represent a hydrogen or a univalent hydrocarbon group; R^{e} represents a divalent hydrocarbon group; p and q each represent an integer from 0-4)
for example, bis(hydroxyaryl)alkanes such as bis(4-hydroxyphenyl)methane, 1,1-bis(4-hydroxyphenyl)ethane, 2,2-bis(4-hydroxyphenyl)propane, 2,2-bis(4-hydroxyphenyl)butane, 2,2-bis(hydroxyphenyl)octane, bis(4-hydroxyphenyl)phenylmethane, 2,2-bis(4-hydroxy-1-methylphenyl)propane, 1,1-bis(4-hydroxy-t-butylphenyl)propane, and 2,2-bis(4-hydroxy-3-bromophenyl)propane; bis(hydroxyaryl)cycloalkanes such as 1,1-bis(4-hydroxyphenyl)cyclopentane, and 1,1-bis(4-hydroxyphenyl)cyclohexane; dihydroxyaryl ethers such as 4,4'-dihydroxydiphenyl ether, and 4,4'-dihydroxy-3,3'-dimethylphenyl ether; dihydroxyaryl sulfides such as 4,4'-dihydroxydiphenyl sulfide, and 4,4'-dihydroxy-3,3'-dimethylphenyl sulfide; dihydroxyaryl sulfoxides such as 4,4'-dihydroxydiphenyl sulfoxide, and 4,4'-dihydroxy-3,3'-dimethyldiphenyl sulfoxide; dihydroxyarylsulfone such as 4,4'-dihydroxydiphenylsulfone, and 4,4'-dihydroxy-3,3'-dimethyldiphenylsulfone; etc., can be mentioned as dihydroxy aromatic compounds, but the compounds are not limited to these. Among those described above, 2,2-bis(4-hydroxyphenyl)propane is especially suitable. In addition to those described above, the compounds shown in the formula below 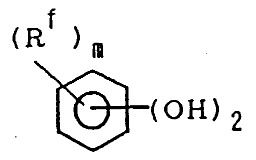
(in this case, R^{f} represents a hydrocarbon group with 1-10 carbon atoms, or halides thereof, or halogens, and m represents an integer from 0-4)
for example, resorcinol, 3-methylresorcinol, 3-ethylresorcinol, 3-propylresorcinol, 3-butylresorcinol, 3-t-butylresorcinol, 3-phenylresorcinol, 3-cumylresorcinol, 2,3,4,6-tetrafluororesorcinol, and 2,3,4,6-tetrabromoresorcinol, and other substituted resorcinols; catechol; hydroquinone and substituted hydroquinones such as 3-methylhydroquinone, 3-ethylhydroquinone, 3-propylhydroquinone, 3-butylhydroquinone, 3-t-butylhydroquinone, 3-phenylhydroquinone, 3-cumylhydroquinone, 2,3,5,6-tetramethylhydroquinone, 2,3,5,6-tetra-t-butylhydroquinone, 2,3,5,6-tetrafluorohydroquinone, and 2,3,5,6-tetrabromohydroquinone,
and 2,2,2',2'-tetrahydro-3,3,3',3'-tetramethyl-1,1'-spiro-B-[1H-indene]-7,7'-diol shown in the formula below 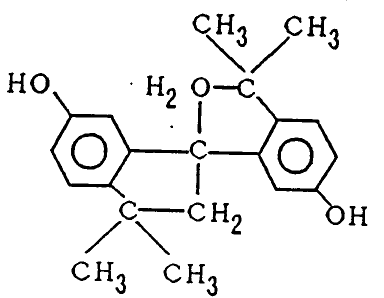
etc., can be used as well.

The dihydroxy aromatic compounds described above can be used independently, or two or more of these may be used in combination.

Also, the carbonate is not especially limited; for example, diphenyl carbonate, ditolyl carbonate, bis(chlorophenyl) carbonate, m-cresyl carbonate, dinaphthyl carbonate, bis(diphenyl) carbonate, diethyl carbonate, dimethyl carbonate, dibutyl carbonate, dicyclohexyl carbonate, etc., can be mentioned, but it is not limited to these. Preferably, a diphenyl carbonate is used.

These carbonates may also be used independently or in combinations of two or more.

Said carbonate may include dicarboxylic acids, or dicarboxylic acid esters. For examples of dicarboxylic acids, and dicarboxylic acid esters, aromatic dicarboxylic acids such as terephthalic acid, isophthalic acid, diphenyl terephthalic acid, and diphenyl isophthalic acid; aliphatic dicarboxylic acids such as succinic acid, glutaric acid, adipic acid, pimeric acid, suberic acid, azelaic acid, sebacic acid, decandioic acid, dodecandioic acid, diphenylsebacic acid, diphenyldecandioic acid, and diphenyldodecandioic acid; alicyclic dicarboxylic acids such as cyclopropanedicarboxylic acid, 1,2-cyclobutanedicarboxylic acid, 1,3-cyclobutanedicarboxylic acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, cyclopropanediphenyldicarboxylic acid, 1,2-cyclobutanediphenyldicarboxylic acid, 1,3-cyclobutanediphenyldicarboxylic acid, 1,2-cyclopentanediphenyldicarboxylic acid, 1,3-cyclopentanediphenyldicarboxylic acid, 1,2-cyclohexanediphenyldicarboxylic acid, 1,3-cyclohexanediphenyldicarboxylic acid, and 1,4-cyclohexanediphenyldicarboxylic acid, etc., can be mentioned. The dicarboxylic acids or dicarboxylic acid esters described above can be used independently, or in combinations of two or more. The dicarboxylic acids or dicarboxylic acid esters included in said carbonic acid diester is preferably less than 50 mol%, and especially less than 30 mol% is desirable.

In manufacturing of polycarbonate, in addition to the dihydroxy aromatic compound and carbonic acid diester, it is possible to use a polyfunctional compound containing three or more functional groups in one molecule. For said polyfunctional compound, compounds containing phenolic hydroxy group, or carboxy group, and compounds containing three phenolic groups are especially desirable. For a specific example of desirable compounds, 1,1,1-tris(4-hydroxyphenyl)ethane, 2,2'2''-tris(4-hydroxyphenyl)diisopropylbenzene, α-methyl-α,α',α'-tris(4-hydroxyphenyl)-1,4-diethylbenzene, α,α',α''-tris(4-hydroxyphenyl)-1,3,5-triisopropylbenzene, fluoroglycin, 4,6-dimethyl-2,4,6-tri(4-hydroxyphenyl)heptane-2, 1,3,5-tri(4-hydroxyphenyl)benzene, 2,2-bis-(4,4-(4,4'-dihydroxyphenyl)cyclohexyl)propane, trimellitic acid, 1,3,5-benzenetricarboxylic acid, pyromellitic acid, etc., can be mentioned.
It is especially desirable to use 1,1,1-tris(4-hydroxyphenyl)ethane, α,α',α''-tris(4-hydroxyphenyl)-1,3,5-triisopropylbenzene, etc. The proportion of said polyfunctional compounds used is preferably less than 0.03 mol for 1 mol of dihydroxy aromatic compound, and 0.001-0.02 mol is desirable, and 0.001-0.01 mol is especially desirable.

Also, in manufacturing polycarbonate, a compound capable of introducing at least one end group represented by the formula 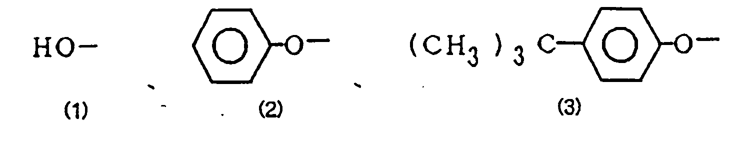 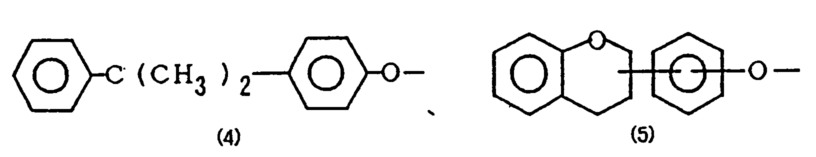
(in this case, the aromatic ring or chromanyl group may be substituted with an alkyl group with 1-9 carbon atoms) can be further included in the polycarbonate produced. As a compound capable of introducing the hydroxy group shown in (1), diol compounds such as bisphenol A can be mentioned. Also, as compounds capable of introducing the phenoxy group shown in (2), phenols and diphenyl carbonates, etc., can be mentioned; as compounds capable of introducing p-t-butylphenoxy group shown in (3), p-t-butylphenol, p-t-butyldiphenyl carbonate, p-t-butylphenyl carbonate, etc., can be mentioned; as compounds capable of introducing p-cumylphenoxy group (p-phenylisopropylphenoxy group) shown in (4), p-cumylphenol, p-cumyldiphenyl carbonate, p-cumylphenyl carbonate, etc., can be mentioned, respectively. For the chromanyl phenoxy group shown in (5) in the formula described above, chromanylphenoxy group shown in the formula below 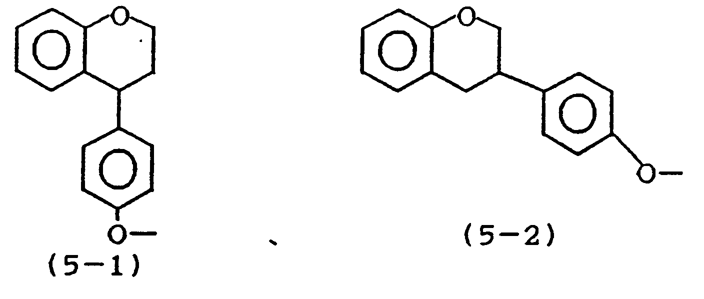 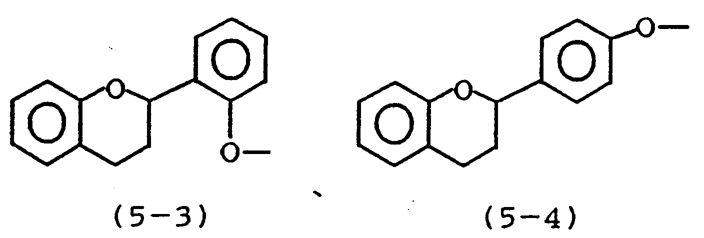
can be mentioned. For compounds capable of introducing the group shown in (5-1), 2,2,4-trimethyl-4-(4-hydroxyphenyl)chroman, 2,2,4,6-tetramethyl-4-(3,5-dimethyl-4-hydroxyphenyl)chroman, 2,3,4-trimethyl-2-ethyl-4-(3-nonyl-4-hydroxyphenyl)-7-nonylchroman, 2,2,4-trimethyl-4-(3,5-diethyl-4-hydroxyphenyl)-6-ethylchroman, 2,2,4,6,8-pentamethyl-4-(3,5-dimethyl-4-hydroxyphenyl)chroman, 2,2,4-triethyl-3-methyl-4-(4-hydroxyphenyl)chroman, 2,2,4-trimethyl-4-(3-bromo-4-hydroxyphenyl)chroman, 2,2,4-trimethyl-4-(3-bromo-4-hydroxyphenyl)-6-bromochroman, 2,2,4-trimethyl-4-(3,5-dibromo-4-hydroxyphenyl)-6-bromochroman, 2,2,4-trimethyl-4-(3,5-dibromo-4-hydroxyphenyl)-6,8-dibromochroman, etc., can be mentioned, and among those described above, 2,2,4-trimethyl-4-(4-hydroxyphenyl)chroman is especially desirable, and for compounds capable of introducing the group shown in (5-2), 2,2,3-trimethyl-3-(4-hydroxyphenyl)chroman, 2,2,3,6-tetramethyl-3-(3,5-dimethyl-4-hydroxyphenyl)chroman, 2,3,4-trimethyl-2-ethyl-3-(3-nonyl-4-hydroxyphenyl)-7-nonylchroman, 2,2,3-trimethyl-3-(3,5-diethyl-4-hydroxyphenyl)-6-ethylchroman, 2,2,3,6,8-pentamethyl-3-(3,5-dimethyl-4-hydroxyphenyl)chroman, 2,2,3-triethyl-3-methyl-3-(4-hydroxyphenyl)chroman, 2,2,3-trimethyl-3-(3-bromo-4-hydroxyphenyl)-6-bromochroman, 2,2,3-trimethyl-3-(3,5-dibromo-4-hydroxyphenyl)-6-bromochroman, 2,2,3-trimethyl-3-(3,5-dibromo-4-hydroxyphenyl)-6,8-dibromochroman, etc., can be mentioned, and among those described above, 2,2,3-trimethyl-3-(4-hydroxyphenyl)chroman is especially desirable;, for compounds capable of introducing the group shown in (5-3), 2,4,4-trimethyl-2-(2-hydroxyphenyl)chroman, 2,4,4,6-tetraethyl-2-(3,5-dimethyl-2-hydroxyphenyl)chroman, 2,3,4-trimethyl-4-ethyl-2-(3,5-dimethyl-2-hydroxyphenyl)-7-nonylchroman, 2,4,4-trimethyl-2-(3,5-dimethyl-2-hydroxyphenyl)-6-ethylchroman, 2,4,4,6,8-pentamethyl-2-(3,5-dimethyl-2-hydroxyphenyl)-6-ethyl chroman, 2,4,4-trimethyl-2-(3-bromo-2-hydroxyphenyl)chroman, 2,4,4-trimethyl-02-(3,5-dibromo-2-hydroxyphenyl)-6-bromochroman, 2,4,4-trimethyl-2-(3-bromo-2-hydroxyphenyl)-6-bromochroman, 2,4,4-trimethyl-2-(3,5-dibromo-2-hydroxyphenyl)-6,8-dibromochroman, etc., can be mentioned, and among those described above, 2,2,4-trimethyl-2-(2-hydroxyphenyl)chroman is especially desirable; for compounds capable of introducing the group shown in (5-4), 2,4,4-trimethyl-2-(4-hydroxyphenyl)chroman, 2,4,4,6-tetramethyl-2-(3,5-dimethyl-4-hydroxyphenyl)chroman, 2,4,4-triethyl-2-(4-hydroxyphenyl)chroman, 2,3,4-trimethyl-4-ethyl-2-(3,5-dimethyl-4-hydroxyphenyl)-7-nonylchroman, 2,4,4-trimethyl-2-(3,5-diethyl-4-hydroxyphenyl)-6-ethylchroman, 2,4,4,6,8-pentamethyl-2-(3,5- dimethyl-4-hydroxyphenyl)-6-ethylchroman, 2,4,4-trimethyl-2-(3-bromo-4-hydroxyphenyl)chroman, 2,4,4-trimethyl-2-(3-bromo-4-hydroxyphenyl)-6-bromochroman, 2,4,4-trimethyl-2-(3,5-dibromo-4-hydroxyphenyl)-6-bromochroman, 2,4,4-trimethyl-2-(3,5-dibromo-4-hydroxyphenyl)-6,8-dibromochroman, etc., can be mentioned, and among those described above, 2,4,4-trimethyl-2-(4-hydroxyphenyl)chroman is especially desirable. Among those listed above, the aromatic ring, or aliphatic ring may be further substituted with an alkyl group with 1-9 carbon atoms. These compounds may be used independently, or in combinations of two or more compounds.

Preferably, 1.00-1.30 mole, especially, 1.01-1.20 mole, of the carbonic acid diester is used for 1 mol of dihydroxy aromatic compound, and the reaction of the two is carried out in the presence of a catalyst.

For catalysts, for example, compounds suggested by the applications in the specification of Japanese Patent Application No. Hei 2[1990]-85218 can be used. For example, it is desirable to use (a) organic acid salts, inorganic acid salts, oxides, hydroxides, hydrides, and alcolates of metals such as alkaline metals and alkaline-earth metals. For specific examples of said compounds, sodium hydroxide, potassium hydroxide, lithium hydroxide, sodium bicarbonate, potassium bicarbonate, lithium bicarbonate, sodium carbonate, potassium carbonate, lithium carbonate, sodium acetate, potassium acetate, lithium acetate, sodium stearate, potassium stearate, lithium stearate, sodium borohydride, lithium borohydride, sodium borophenylide, sodium benzoate, potassium benzoate, lithium benzoate, disodium hydrogenphosphate, dipotassium hydrogenphosphate, dilithium hydrogenphosphate, disodium salt, dipotassium salt, dilithium salt of bisphenol A, sodium salt, potassium salt, lithium salt of phenol; calcium hydroxide, barium hydroxide, magnesium hydroxide, strontium hydroxide, calcium bicarbonate, barium bicarbonate, magnesium bicarbonate, strontium bicarbonate, calcium carbonate, barium carbonate, magnesium carbonate, strontium carbonate, calcium acetate, barium acetate, magnesium acetate, strontium acetate, calcium stearate, barium stearate, magnesium stearate, and strontium stearate, etc., can be mentioned, but is not limited to those described above. These compounds may be used independently, or in a combination of two or more compounds. Said alkali metal compounds and/or alkaline-earth metal compounds used is usually 10⁻⁸ to 10⁻³ mol, preferably 10⁻⁷ to 10⁻⁶ mol, and especially 10⁻⁷ to 8 x 10⁻⁷ mol for 1 mol of dihydroxy aromatic compound.

Also, in addition to said alkali metal compounds and/or alkaline-earth metal compounds, (b) basic compounds can be used as catalysts. For examples of said basic compounds, nitrogen compounds can be mentioned, and specifically, ammonium hydroxides containing alkyl, aryl, and alaryl [sic; possibly arallyl] groups such as tetramethylammonium hydroxide, tetraethylammonium hydroxide, tetrabutylammonium hydroxide, and trimethylbenzylammonium hydroxide; tertiary amines such as trimethylamine, triethylamine, dimethylbenzylamine, and triphenylamine; secondary or primary amines containing alkyl group, phenyl group, toluyl group, etc., such as methyl groups and ethyl groups; ammonia; and basic salts such as tetramethylammonium borohydride, tetrabutylammonium borohydride, tetrabutylammonium tetraphenyl borate, and tetramethyl ammonium tetraphenyl borate, can be mentioned, but are not limited to these materials. Among those described above, ammonium hydroxide is especially desirable. These basic compounds may be used independently, or in combination of two or more.
[0032]

In the present invention, when a combination comprised of
(a) an alkali metal compound and/or alkaline-earth metal compound, and
(b) a nitrogen-containing basic compound

described above is used, it is possible to produce a polycarbonate with a high molecular weight at a high polymerization activity level.

Also, as a catalyst, a combination comprised of
(a) an alkali metal compound and/or an alkaline-earth metal compound,
(b) a nitrogen-containing basic compound, and
(c) either boric acid or a borate

can be used. When a catalyst comprised of said combination is used, it is desirable to use (a) an alkali metal compound, and/or an alkaline-earth metal compound in an amount-described above, and (b) a nitrogen-containing compound in an amount of 10⁻⁶ to 10⁻¹ mol, especially 10⁻⁵ to 10⁻² mol, for 1 mol of dihydroxy aromatic compound. For the boric acid or borate of (c), the compound shown in the general formula below

B(OR³)_{n'}(OH)_{3-n'}

(in this case, R³ represents hydrogen, an aliphatic hydrocarbon group, alicyclic hydrocarbon group, or aromatic hydrocarbon group, and n' represents an integer from 1-3)
is desirable, and for examples, boric acid, trimethylborate, triethylborate, tributylborate, trihexylborate, triheptylborate, triphenylborate, tritolylborate, and trinaphthylborate, etc., can be mentioned. Among those described above, triphenyl borate is especially desirable. When boric acid or borate of (c) is used as a catalyst in combination with said components (a) and (b), the amount used is preferably 10⁻⁶ to 10⁻¹ mol, especially 10⁻⁵ to 10⁻² mol.

Conditions such as temperature and pressure at the time of hot-melt polymerization are not especially limited, and standard conditions can be used. Specifically, the first stage reaction is carried out at 80-250°C, preferably 100-230°C, and especially 120-190°C, for 0-5 h, preferably 0-4 h, and especially 0.25-3 h, under normal pressure. Then, the reaction temperature is increased as the pressure in the reaction system is reduced, and a reaction is performed for the dihydroxy aromatic compound and carbonic acid diester, and it is desirable to achieve the final reaction for the dihydroxy aromatic compound and carbonic acid diester at a temperature of 240-320°C under a reduced pressure of 0.05-5 mm Hg.

The reaction between the dihydroxy aromatic compound and carbonic acid diester described above may be performed by a continuous system or batch system. Also, the reaction device used to achieved said reaction may be a tank, tube, or tower.

The polyester of component (A) used in the present invention has a repeating unit of a terephthalic acid as the primary acid component, and cyclohexanedimethanol as the primary glycol component, and the intrinsic viscosity [η] (measurement based on ASTM D-2875) of at least 0.5 dL/g, preferably, 0.55-0.75 dL/g. When the intrinsic viscosity [η] is less than 0.5 dL/g, it is not suitable for use as an injection molding material because of the low molecular weight. Said polyester is preferably a polydimethylenecyclohexane terephthalate (PCT) produced by performing a polycondensation reaction between a dimethyl terephthalate and cyclohexanedimethanol. The main acid component is a terephthalic acid, and the main glycol component is cyclohexanedimethanol, but other acid components and glycol components can be included in an amount that does not have an adverse effect on the polydimethylenecyclohexane terephthalate.

In the resin composition of the present invention, the mixing ratio of polyester component (A) and polycarbonate component (B) is preferably 95-5 parts of (A) and 5-95 parts of (B), and especially preferable is 40-5 parts of (A) and 60-95 parts of (B). When component (A) is less than 5 parts, and component (B) exceeds 95 parts, the flow property remains inferior, and properties such as chemical resistance, which are the features of the PCT are reduced; therefore, it is not desirable. When component (A) exceeds 95 parts, and component (B) is less than 5 parts, the impact resistance remains unchanged, and it is not possible to produce a transparent resin composition, and this is not desirable.

As for the method of manufacturing the resin composition of the present invention, it is not especially limited, and standard methods commonly used can be employed, and in general, a hot-melt mixing method is desirable. Also, it is possible to use a small amount of a solvent. For the mixer, for example, extruders, Banbury mixers, rollers, and kneaders, etc., can be mentioned, and either a batch system or a continuous system may be used.

Furthermore, in addition to the components described above, various types of elastomers, reinforcement materials, fillers, heat stabilizers, antioxidants, ultraviolet absorbers, photostabilizers, plasticizers, plasticizers [sic], antistatic agents, flame retardants, and other additives commonly known to those familiar with the field can be included in the resin composition of the present invention.

In the following, the present invention is further explained in detail with application examples and comparative examples, but the present invention is not limited to these examples.

### Application examples

In the following application examples and comparative examples, the components described below are used.

### Component (A): Polyester

Polydimethylenecyclohexane terephthalate with an intrinsic viscosity [η] (chloroform, 25°C) of 0.70 dl/g (it is referred to as PCT in Table I).

### Component (B): Polycarbonate

A polycarbonate with an intrinsic viscosity [η] (methylene chloride, 25°C) of 0.50 dL/g produced by hot-melt polymerization of bisphenol A and diphenyl carbonate. The equivalence ratio of the phenolic end groups (I) and nonphenolic end groups (II), (I)/(II) is 1/1 (referred to as PC-1 in Table I).

### Comparative component:

Lexan 141 (product name, product of General Electric Co.)

A polycarbonate with a intrinsic viscosity [η] (methylene chloride, 25°C) of 0.51 dL/g produced by polymerization of bisphenol A and carbonyl chloride and capping the end with a phenyl group. The equivalence ratio of the phenolic end groups (I) and nonphenolic end groups (II), (I)/(II), is approximately 1/99 (referred to as PC-2 in Table I).

### Application Examples 1-3 and Comparative Examples 1-3

Each component in the amount (parts) listed in Table I was kneaded in a uniaxial extruder with a 60-mm diameter, at a barrel temperature of 280°C, and rotation rate of 200 rpm, and a pellet was extruded. Furthermore, the pellet produced was injection molded by an injection molder with a cylinder temperature of 280°C and a die temperature of 80°C, and different properties were measured for the sample pieces produced.

Properties described for the application examples and comparative examples were evaluated by the test methods described below.

Light transmissivity: Based on ASTM D/003, and a plate thickness was 3 mm.

Degree of haze (haze): Measurement performed by NHD-200 (produced by Nippon Denshoku Co. Ltd.).

Izod impact strength: Based on ASTM D256, 1/8 in bar-notched Izod impact strength was measured.

MI: Based on the definition of JIS K-7210, measurement was performed at 300°C with a load of 1.2 kg.
The evaluation results are shown in Table I.

**Table I**

| | Examples | | | Comparative Examples | | |
|---|---|---|---|---|---|---|
| | 1 | 2 | 3 | 1 | 2 | 3 |
| PCT Parts | 10 | 20 | 40 | 10 | 20 | 40 |
| PC-1 Parts | 90 | 80 | 60 | - | - | - |
| PC-2 Parts | - | - | - | 90 | 80 | 60 |
| Light transmissivity % | 89.0 | 89.0 | 87.5 | 89.0 | 69.0 | 60.0 |
| Haze | 0.9 | 1.5 | 1.8 | 0.8 | 18.0 | 26.0 |
| Izod impact strength | 51 | 48 | 46 | 42 | 31 | 30 |
| (kg cm/cm) | | | | | | |
| MI(g/10min) | 22 | 36 | 52 | 16 | 31 | 49 |

As shown above, compared with the comparative examples, the resin compositions of the present invention exhibit superior transparency and impact resistance.

## Claims

1. A resin composition containing
(A) a polyester having a terephthalic acid repeating unit as the primary acid component and cyclohexanedimethanol as the primary glycol component and an intrinsic viscosity [η] of at least 0.5 dL/g, and
(B) a polycarbonate produced by performing a hot-melt polymerization of a dihydroxy aromatic compound having an equivalence ratio of phenolic end groups (I) and nonphenolic end groups (II), (I)/(II) greater than 1/19.

2. The resin composition described in Claim 1, in which said phenolic end groups (I) are represented by the following formula 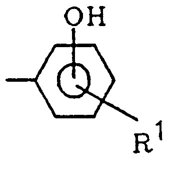 and the nonphenolic end groups (II) are represented by the following formula 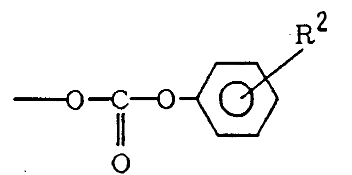 (in the above formulas R¹ and R² each represent hydrogen, or a straight-chain or branched, nonsubstituted or halogen-substituted alkyl group with less than 20 carbon atoms).
